(19) Europäisches Patentamt
European Patent Office
Office européen des brevets

(11) Veröffentlichungsnummer: **0 662 511 A2**

# (12) EUROPÄISCHE PATENTANMELDUNG

(21) Anmeldenummer: **94117056.5**

(22) Anmeldetag: **28.10.94**

(30) Priorität: **30.12.93 DE 4344991**

(43) Veröffentlichungstag der Anmeldung:
**12.07.95 Patentblatt 95/28**

(84) Benannte Vertragsstaaten:
**BE DE ES FR GB IT NL SE**

(51) Int. Cl.6: **C11D 17/00**

(71) Anmelder: **HÜLS AKTIENGESELLSCHAFT**
**D-45764 Marl (DE)**

(72) Erfinder: **Balzer, Dieter, Dr.**
**Talstrasse 21**
**D-45721 Haltern (DE)**
Erfinder: **Hoffmann, Heinz, Prof. Dr.**
**Waldsteinring 40**
**D-95448 Bayreuth (DE)**

## (54) Verfahren zur Umwandlung hexagonal flüssig-kristalliner wässriger Tensidphasen.

(57) Die Erfindung betrifft ein Verfahren zur Umwandlung hexagonal flüssigkristalliner Phasen von wäßrigen Tensidlösungen in Phasen niedriger Viskosität durch Zusatz nichtionischer Tenside mit stäbchenförmigen Mizellen.

Als nichtionische Tenside sind insbesondere Fettalkoholoxethylate, Alkylpolyglycoside, Fettsäure-N-alkylpolyhydroxyamide, Aminoxide sowie Fettsäurealkanolamide zu nennen.

Durch dieses Verfahren können gezielt pumpfähige, wäßrige, hochkonzentrierte Formulierungen spezieller Tenside geschaffen werden.

EP 0 662 511 A2

Die Erfindung betrifft ein Verfahren zur Umwandlung wäßriger hexagonal flüssig-kristalliner in fließfähige Tensidphasen.

Die Phasendiagramme üblicher Tenside in wäßriger Lösung, ob es sich nun um anionische, kationische, betainische oder um nichtionische Tenside handelt, weisen im Konzentrationsbereich zwischen etwa 25 und 80 % gewöhnlich eine hexagonal flüssig-kristalline Phase auf. Diese zeigt gelartige Eigenschaften, die häufig auch bei erhöhter Temperatur erhalten bleiben. Die Herstellung einer pumpfähigen Lieferform in diesem Konzentrationsbereich ist daher schwierig.

Andererseits ist eine Lösung dieser Aufgabe dringend notwendig, wenn höher konzentrierte wäßrige Tensidsysteme an den Ort ihrer Verwendung transportiert werden müssen. Selbstverständlich existieren eine Reihe von Kunstgriffen, die diesem Ziel dienen, und sie werden seit vielen Jahren erfolgreich angewendet. So gelingt es in manchen Fällen durch Zusatz von Lösemitteln, wie z. B. kurzkettigen Alkoholen oder Glykolen, pumpfähige, hochkonzentrierte Tensidlösungen herzustellen. Auch durch Additivierung mit hydrotropen Stoffen, wie Natriumoktanat oder Natriumxylolsulfonat, gelingt es in manchen Fällen, eine Gelierungstendenz abzumildern. Auch Harnstoffzusätze und gewisse Dicarbonsäuren zeigen solche Wirkungen [S. E. Friberg u. T. D. Flaim in ACS Symposium Series 253, M. J. Rosen Editor, 107 (1984)].

Alle diese Kunstgriffe beinhalten keine allgemeine Lösung des Problems, sondern sie sind nur in speziellen Fällen erfolgreich. Für das jeweilige Problem der Schaffung einer pumpfähigen, wäßrigen, hochkonzentrierten Formulierung eines speziellen Tensids bedeutet dies größere Versuchsserien nach der Methode "Trial and Error". Dringend erforderlich und Aufgabe der vorliegenden Erfindung ist es daher, ein allgemeines Verfahren zu entwickeln, das unabhängig vom vorliegenden Tensid zu einer Problemlösung führt.

Völlig unerwartet wurde diese Aufgabe dadurch gelöst, daß man dem zum hexagonal flüssig-kristallinen Zustand führenden Tensid oder Tensidgemisch ein nichtionisches Tensid oder Tensidgemisch hinzufügt, das die Eigenschaft hat, stark anisometrische Mizellen zu bilden. Gewöhnlich sind dies Stäbchenmizellen mit hohen Achsenverhältnissen, die sich bereits in verdünnter wäßriger Lösung ausbilden. Letztere zugesetzt verhindern die Ausbildung einer hexagonalen Nahordnung und führen in den meisten Fällen zu lamellar flüssig-kristallinen Phasen, die sich durch eine vergleichsweise niedrige Viskosität auszeichnen. In manchen Fällen führt der Zusatz von nichtionischen Tensiden mit stäbchenförmigen Mizellen auch zu niedrigviskosen optisch isotropen Phasen. Die Verhinderung der Ausbildung der hexagonalen Nahordnung durch stäbchenförmige Mizellen ist völlig überraschend, da letztere normalerweise die Vorstufe zu deren Ausbildung sind und diese daher eher begünstigen sollten (vgl. H. Hoffmann und W. Ulbricht in "Die Tenside", Herausg. K. Kosswig, H. Stache, S. 47, München 1993).

Gegenstand der Erfindung ist daher ein Verfahren zur Umwandlung hexagonal flüssig-kristalliner Phasen von wäßrigen Tensidlösungen in Phasen niedrigerer Viskosität, dadurch gekennzeichnet, daß man nichtionische Tenside bzw. deren Gemische, die in verdünnter Lösung anisometrische Mizellen bilden, zusetzt.

Die erfindungsgemäß zuzusetzenden nichtionischen Tenside mit stäbchenförmigen Mizellen werden vorzugsweise aus solchen Produktgruppen ausgewählt, die sich mit den zur hexagonalen Phase führenden anwendungstechnisch vorteilhaft kombinieren lassen. Es sind dies insbesondere Fettalkoholoxethylate, Alkylpolyglycoside, Fettsäure-N-alkyl-polyhydroxy-amide, Aminoxide sowie Fettsäurealkanolamide. Neben diesen anwendungstechnisch wichtigen Tensidklassen existieren weitere erfindungsgemäße Tensidklassen mit stäbchenförmigen Mizellen, wie sie u. a. von H. Hoffmann u. W. Ulbricht loc. cit. beschrieben werden.

Tenside, die bei höherer Konzentration (etwa zwischen 25 bis 75 %) in wäßriger Lösung zur gelartigen hexagonal flüssig-kristallinen Phase führen, sind äußerst üblich.

Es sind dies anionische Tenside, wie Fettalkoholsulfate, Fettalkoholethersulfate, carboxymethylierte Oxethylate, Alkylsulfosuccinate, Alkylethersulfosuccinate, Fettalkoholethersulfonate, Fettalkoholetherphosphate, Alkansulfonate, Alkylbenzolsulfonate, Olefinsulfonate, Fettsäureisothionate, Fettsäuren, Sarcosinate, als Alkali-, Erdalkali-, Ammonium- oder Ethanolammoniumsalze. Bevorzugt sind die Natriumsalze.

Andere Gruppen mit diesen Eigenschaften sind amphotere Tenside oder Betaine, wobei sowohl Carbo- wie Sulfobetaine zu nennen sind. Besonders wichtig sind Alkylbetaine, Alkylamidobetaine und Imidazoliniumbetaine.

Ebenfalls zur Bildung hexagonal flüssig-kristalliner Phasen neigen kationische Tenside in wäßriger Lösung, womit in erster Linie nicht zu hydrophobe quaternäre Ammoniumverbindungen auf Basis tertiärer Amine oder Imidazoline gemeint sind.

Schließlich zeigen auch nichtionische Tenside wie Fettalkoholoxethylate oder andere Ethylenoxid-Kondensate diese Eigenschaften, vorausgesetzt die HLB-Werte liegen etwa oberhalb 12. Bei niedrigeren HLB-Werten ist die hexagonale Phase zu niedrigeren Temperaturen verschoben, so daß solche Tenside

häufig durch Temperaturerhöhung fließfähig werden.

Auch Mischungen der genannten Tenside, soweit sie miteinander verträglich sind, bilden bei höheren Konzentrationen in wäßriger Lösung gelartige hexagonale Phasen, die sich durch das erfindungsgemäße Verfahren in pumpbare Formulierungen verwandeln lassen.

Die erfindungsgemäß den zu den hexagonal flüssig-kristallinen Phasen führenden Tensiden zuzusetzenden Fettalkoholoxethylate entsprechen der Formel I

I $R - O - (CH_2 - CH_2 - O)_n H$,

in der R gesättigte oder ungesättigte, verzweigte oder unverzweigte Alkylreste mit 10 bis 18 C-Atomen bedeutet und n eine Zahl zwischen 2 und 10 ist. n ist so bemessen, daß der HLB-Wert $\leqq$ 12 ist. Höhere HLB-Werte führen gewöhnlich zu nicht erfindungsgemäßen kugelförmigen Mizellen.

Die Verbindungen werden im allgemeinen durch Anlagerung von Ethylenoxid (EO) an längerkettige Alkohole in Gegenwart von basischen oder sauren Katalysatoren hergestellt.

Erfindungsgemäße Additive zur Umwandlung der hexagonalen Phase sind auch Alkylpolyglycoside. Sie genügen der Formel II

II $R' - O - Z_n$,

in der R' für einen linearen oder verzweigten, gesättigten oder ungesättigten aliphatischen Alkylrest mit 10 bis 16 Kohlenstoffatomen oder Gemische davon und $Z_n$ für einen Polyglycosylrest mit n = 1,1 bis 3 Hexose- oder Pentoseeinheiten oder Gemische davon stehen.

Bevorzugt werden Alkylpolyglycoside mit Alkylresten mit 12 bis 14 Kohlenstoffatomen sowie einem Polyglycosylrest mit n = 1,1 bis 2. Besonders bevorzugt werden Alkylpolyglucoside.

Die erfindungsgemäß eingesetzten Alkylpolyglycoside können nach bekannten Verfahren auf Basis nachwachsender Rohstoffe hergestellt werden.

Beispielsweise wird Dextrose in Gegenwart eines sauren Katalysators mit n-Butanol zu Butylpolyglycosidgemischen umgesetzt, welche mit langkettigen Alkoholen ebenfalls in Gegenwart eines sauren Katalysators zu den gewünschten Alkylpolyglycosidgemischen umglycosidiert werden. Oder Dextrose wird unmittelbar mit dem gewünschten langkettigen Alkohol umgesetzt.

Die Polyglycosylreste $Z_n$ werden einerseits durch die Auswahl des Kohlenhydrats und andererseits durch die Einstellung des mittleren Polymerisationsgrads n nach DE-OS 19 43 689 festgelegt. Im Prinzip können bekanntlich Polysaccharide, z. B. Stärke, Maltodextrine, Dextrose, Galaktose, Mannose, Xylose, etc. eingesetzt werden. Bevorzugt sind die großtechnisch verfügbaren Kohlenhydrate Stärke, Maltodextrine und besonders Dextrose.

Da die wirtschaftlich interessanten Alkylpolyglycosidsynthesen nicht regio-und stereoselektiv verlaufen, sind die Alkylpolyglycoside stets Gemische von Oligomeren, die ihrerseits Gemische verschiedener isomerer

Formen darstellen. Sie liegen nebeneinander mit $\alpha$- und $\beta$-glycosidischen Bindungen in Pyranose- und Furanoseform vor. Auch die Verknüpfungsstellen zwischen zwei Saccachridresten sind unterschiedlich.

Formal sind die Alkylpolyglycoside nichtionische Tenside, tatsächlich ist ein kleiner Anteil ihres komplexen Produktspektrums anionisch (vgl. D. Balzer, Langmuir 9 (12) 1993).

Die Verwendung der Alkylpolyglycoside zur Viskositätsabsenkung anionischer oder betainischer wäßriger Tensidlösungen beinhaltet bereits ein in der WO 91/04313 beschriebenes Verfahren. Allerdings benötigt diese Methode zwingend die Zugabe von Alkalichloriden, die hier offensichtlich die Viskositätserniedrigung erst bewirken oder zumindest spezifisch beeinflussen. Eine solche Maßnahme erübrigt sich bei dem erfindungsgemäßen Verfahren in den meisten Fällen. Dort wird die viskositätserniedrigende Phasenumwandlung ausschließlich durch den Zusatz an nichtionischem Tensid mit stäbchenförmigen Mizellen bewirkt. In manchen Fällen aber beschleunigt ein Zusatz von Salzen, der in keiner Weise aber auf Alkalichloride beschränkt ist, sondern ebenso bei Sulfaten oder Citraten beobachtet wird, die Phasenumwandlung.

Weitere nichtionische Tenside mit stäbchenförmigen Mizellen, die gelförmige hexagonal flüssig-kristalline Phasen in fließfähige lamellare umwandeln, sind N-Alkylpolyhydroxyfettsäureamide der Formel III

III 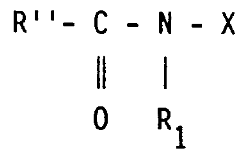 ,

worin R'' für einen verzweigten oder unverzweigten Alkylrest mit 8 bis 18 C-Atomen, $R_1$ für einen kurzkettigen Alkylrest mit 1 bis 3 C-Atomen und X für einen Polyhydroxyalkylrest mit 4 bis 7 C-Atomen stehen. Vorzugsweise stellt X einen 1-Desoxisorbitylrest dar, wobei als bevorzugtes Amid N-Alkylfettsäureglucamid resultiert. Besonders bevorzugt sind N-Methyl-$C_{10}$-$C_{14}$-Fettsäureglucamide.

Die erfindungsgemäß einzusetzenden Verbindungen können bekanntermaßen durch Umsetzung von Fettsäuren bzw. Fettsäureestern mit ggf. N-substituiertem Polyhydroxyalkylamin in der Schmelze, ggf. in Gegenwart alkalischer Katalysatoren, hergestellt werden (vgl. EP 0 285 768).

Auch Aminoxide, deren Mizellstruktur vor einiger Zeit als Stäbchen erkannt wurde, zeigen den erfindungsgemäßen Übergang der hexagonal flüssigkristallinen in eine fließfähige lamellare Phase. Sie werden durch Formel IV beschrieben:

IV 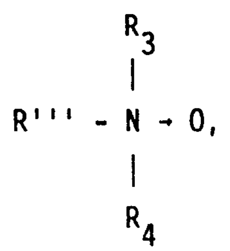

worin R''' einen gesättigten oder ungesättigten, verzweigten oder unverzweigten Alkylrest mit 10 bis 18 C-Atomen und $R_3$ und $R_4$ kurzkettige $C_1$ bis $C_3$-Alkylreste bedeuten.

Bevorzugt werden $C_{12}$- bis $C_{18}$-Alkyldimethylaminoxide, die sich durch $H_2O_2$-Oxydation der diesbezüglichen tertiären Amine herstellen lassen (vgl. DE 30 14 510).

Schließlich werden auch bei Fettsäurealkanolamiden stäbchenförmige Mizellstrukturen sowie die daraus resultierenden Phasenumwandlungen festgestellt. Fettsäurealkanolamide lassen sich durch Kondensation von Fettsäuren mit Alkanolaminen bei erhöhter Temperatur herstellen. Das Hauptprodukt der erfindungsgemäßen nichtionischen Tensidgruppe entspricht dabei Formel V

V 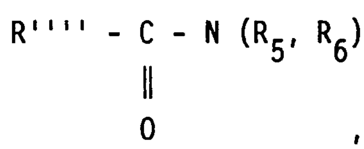

worin R'''' einen gesättigten oder ungesättigten, verzweigten oder unverzweigten Alkylrest mit 10 bis 18 C-Atomen, $R_5$ $C_2H_4OH$ bzw. $C_2H_3(CH_3)OH$ und $R_6$ H, $C_2H_4OH$ bzw. $C_2H_3(CH_3)OH$ bedeuten.

Der Gehalt des zu hexagonal flüssig-kristallinen Phasen führenden Tensids, genannt A, liegt gewöhnlich zwischen 25 und 80 %, vorzugsweise zwischen 30 und 70 %. Der Gehalt des die Phasenumwandlung bewirkenden Tensids mit stäbchenförmiger Mizellstruktur, genannt B, liegt zwischen 10 und 40 %, vorzugsweise zwischen 12 und 30 %. Die Vereinigung der beiden Komponenten erfolgt am besten so, daß unter Rühren gegebenenfalls bei leicht erhöhter Temperatur die Komponenten miteinander vermischt werden.

Mögliche intermediäre, die Vermischung erschwerende Vergelungen lassen sich durch geeignete Verdünnungen mit Wasser beherrschen. Das Verfahren ist auch anwendbar für Tensidmischungen. Dies gilt sowohl bei den zu gelartigen hexagonal flüssig-kristallinen Phasen führenden Tensiden A als auch bei den anisometrische Mizellen bildenden nichtionischen Tensiden B. In manchen Fällen hat sich die zusätzliche

Additivierung mit Salz als zweckmäßig erwiesen.

Das pumpbare Compound kann unter Rühren problemlos weiter verdünnt werden, wobei zweckmäßigerweise Wasser oder eine verdünnte wäßrige Lösung vorgelegt werden.

Das Vorliegen sowie die Vermessung anisometrischer, insbesondere stäbchenförmiger Mizellen, läßt sich z. B. durch Streulichtuntersuchungen nachweisen. Alternativ gelingt dies auch durch elektrische Doppelbrechung. Dabei werden die Tensidmizellen im elektrischen Feld orientiert und ihre Relaxierung nach Abschaltung des Feldes verfolgt. Aus den Relaxationszeiten lassen sich sowohl die Mizell-Längen L als auch die Achsenverhältnisse p stäbchenförmiger Teilchen abschätzen (vgl. Tabelle 2).

Tabelle 1

| Erklärungen der folgenden Tabellen | |
|---|---|
| $C_8$-FSNMGA, $C_{10}$-FSNMGA, etc.: | $C_8$- bzw. $C_{10}$-Fettsäure-N-methylglucamid, etc. |
| $C_{10}C_{12}G_{1.2}$: | $C_{10}C_{12}$-Alkylpolyglucosid mit einem mittleren Glucosidierungsgrad von 1,2. |
| $C_{12}C_{14}(EO)_4H$: | $C_{12}C_{14}$-Fettalkoholoxethylat mit 4 mol EO/mol. |
| $C_{14}H_{29}(CH_3)_2\ N \rightarrow O$: | Aminoxid. |
| $C_{12}C_{14}(EO)_3SS$: | $C_{12}C_{14}$-Oxethylatsulfosuccinat mit 3 mol EO/mol Natriumsalz. |

Tabelle 2

| Längen (L) und Achsenverhältnisse (p) von Stabmizellen ermittelt aus den Relaxationszeiten der elektrischen Doppelbrechung, 0,5 % Tensid, 25 °C | | |
|---|---|---|
| Tensid | L (Å) | p |
| $C_8$-FSNMGA * | - | - * |
| $C_{10}$-FSNMGA | ~ 300 | ~ 11 |
| $C_{12}$-FSNMGA | 2 050 | 72 |
| $C_{14}$-FSNMGA | > 2 050 | > 72 |
| $C_{10}C_{12}G_{1.2}$ | 820 | 32 |
| $C_{12}C_{14}G_{1.2}$ | 2 180 | 73 |
| $C_{12}C_{14}(EO)_5H$ | 5 700 | 202 |
| $C_{12}C_{14}(EO)_{12}H$ | - | - * |
| $C_{14}H_{29}(CH_3)_2\ N \rightarrow O$ | 380 | 11 |
| MARLAMID® DF 1218 | 4 200 | 147 |

* keine anisometrischen Mizellen

Beispiele

Wie Tabelle 2 zeigt, bilden die erfindungsgemäßen nichtionischen Tenside B stäbchenförmige Mizellen mit z. T. sehr hohen Längen L und Achsenverhältnissen p. Je länger die Alkylkette, desto länger sind die Mizellen, und desto höher wird das Achsenverhältnis. Bei $C_8$- bzw. $C_{10}$-Derivaten ist die Asymmetrie der Mizellen wenig ausgeprägt. Entsprechend gering ist auch ihre Fähigkeit der Umwandlung der hexagonal flüssig-kristallinen Phase. Besonders in solchen Fällen ist die zusätzliche Additivierung mit Salzen auf die Phasenumwandlung beschleunigend.

Die erfindungsgemäßen Beispiele sollen das Verfahren weiter erläutern (vgl. Tabellen 3 und 4). Die Ergebnisse enthalten Aussagen zu den Phasenverhältnissen (H = hexagonal, L = lamellar) und zum Fließverhalten (24 h nach der Vereinigung):
f = fest, Viskosität ≧ 40.000 mPas, fl = fließfähig bzw. Viskositätsangabe bei Scherraten von 5 bis 10 $sec^{-1}$ und 30 bis 100 $sec^{-1}$). Die Viskosität liegt hier bei ca. 6 000 mPas bei 5 bis 10 $sec^{-1}$.

Die Beispiele 1, 2, 3, 10, 23, 27 und 30 beschreiben den Ausgangszustand der nicht fließfähigen, hexagonalen Phase. Die Beispiele 6, 7 und 35 sind Vergleichsbeispiele; hier wurde eine ungeeignete Komponente B (kugelförmig oder nur schwach anisometrische Mizellen) verwendet. In den Beispielen 12, 15 und 36 ist die Menge der zugegebenen Menge Komponente B zu gering. Der Vergleich der Beispiele 18 und 19 bzw. 21 und 22 zeigt, daß in Grenzfällen Salze den Vorgang der Phasenumwandlung begünstigen oder beschleunigen können. Beispiel 39 zeigt, daß die Kombination von 2 Tensiden des Typs B ebenfalls zu einer gelartigen hexagonal flüssig-kristallinen Phase führt. Die anderen Beispiele entsprechen voll der Erfindung.

Tabelle 3: (1. Teil)

| Gew.-% | 1 | 2 | 3 | 4 | 5 | 6 |
|---|---|---|---|---|---|---|
| Tensid A | | | | | | |
| $C_{12}C_{14}O(EO)_2\ SO_3Na$ | 40 | 40 | 40 | 40 | 40 | 40 |
| $C_{12}C_{14}O(EO)_3$ SS* | | | | | | |
| $C_8C_{18}\overset{\oplus}{N}(CH_3)_2\ CH_2\ COO^-$ | | | | | | |
| Tensid B | | | | | | |
| $C_{12}C_{14}(EO)_5$ H | | | | 20 | | |
| $C_{12}C_{14}(EO)_7$ H | | | | | 20 | |
| $C_{12}C_{14}(EO)_{12}$ H** | | | | | | 20 |
| $C_8$FSNMGA ** | | | | | | |
| $C_{10}$FSNMGA | | | | | | |
| $C_{12}$- | | | | | | |
| $C_{14}$- | | | | | | |
| $C_{10}C_{12}G_{1.2}$ *, ** | | | | | | |
| $C_{12}C_{14}G_{1.2}$ * | | | | | | |
| Salze | | | | | | |
| NaCl | | 2 | | | | |
| $Na_2SO_4$ | | | 2 | | | |
| Ergebnisse * | | | | | | |
| Phasen | H | H | H | L | L | H |
| Viskosität (mPa·s) | f | f | f | 6350 / 1350 | 6100 / 1300 | f |

* siehe Tabelle 1

** Vergleichsbeispiele

Tabelle 3: (2. Teil)

| Gew.-% | 7 | 8 | 9 | 10 | 11 | 12 |
|---|---|---|---|---|---|---|
| **Tensid A** | | | | | | |
| $C_{12}C_{14}O(EO)_2\ SO_3Na$ | 40 | 40 | 40 | 20 | 20 | 50 |
| $C_{12}C_{14}O(EO)_3\ SS^{*}$ | | | | 20 | 20 | |
| $C_8C_{18}\overset{\oplus}{N}(CH_3)_2\ CH_2\ COO^-$ | | | | | | |
| **Tensid B** | | | | | | |
| $C_{12}C_{14}(EO)_5\ H$ | | | | | | |
| $C_{12}C_{14}(EO)_7\ H$ | | | | | | |
| $C_{12}C_{14}(EO)_{15}\ H^{**}$ | | | | | | |
| $C_8FSNMGA^{**}$ | 20 | | | | | |
| $C_{10}FSNMGA$ | | | | | | |
| $C_{12}$- | | 20 | 20 | | 20 | |
| $C_{14}$- | | | | | | |
| $C_{10}C_{12}G_{1.2}{}^{*,\ **}$ | | | | | | |
| $C_{12}C_{14}G_{1.2}{}^{*}$ | | | | | | 10 |
| **Salze** | | | | | | |
| NaCl | | | 2 | | | |
| $Na_2SO_4$ | | | | | | |
| **Ergebnisse** | | | | | | |
| Phasen | H | L | L | H | L | H |
| Viskosität (mPa·s) | f | 5500 / 1200 | 5300 / 1200 | f | 6000 / 1300 | f |

* siehe Tabelle 1

** Vergleichsbeispiele

Tabelle 3: (3. Teil)

| Gew.-% | 13 | 14 | 15 | 16 | 17 | 18 |
|---|---|---|---|---|---|---|
| Tensid A | | | | | | |
| $C_{12}C_{14}O(EO)_2\ SO_3Na$ | 50 | 50 | 20 | 20 | 40 | 40 |
| $C_{12}C_{14}O(EO)_3\ SS^{*}$ | | | | | | |
| $C_8C_{18}\overset{\oplus}{N}(CH_3)_2\ CH_2\ COO^-$ | | | 20 | 20 | | |
| Tensid B | | | | | | |
| $C_{12}C_{14}(EO)_5\ H$ | | | | | | |
| $C_{12}C_{14}(EO)_7\ H$ | | | | | | |
| $C_{12}C_{14}(EO)_{15}\ H^{**}$ | | | | | | |
| $C_8FSNMGA^{**}$ | | | | | | |
| $C_{10}FSNMGA$ | | | | | | |
| $C_{12}$ | | | | | | 20 |
| $C_{14}$ | | | | | 10 | |
| $C_{10}C_{14}G_{1.2}^{*,\ **}$ | | | | | | |
| $C_{12}C_{14}G_{1.2}^{*}$ | 15 | 15 | 5 | 15 | 10 | |
| Salze | | | | | | |
| NaCl | | 1 | 3 | | | |
| $Na_2SO_4$ | | | | | | |
| Ergebnisse | | | | | | |
| Phasen | L | L | H | L | L | L/H |
| Viskosität (mPa·s) | 6100 / 1500 | 6300 / 1500 | f | 6300 / 1500 | 5380 / 1290 | hochviskos |

Tabelle 3: (4. Teil)

| Gew.-% | 19 | 20 | 21 | 22 |
|---|---|---|---|---|
| Tensid A | | | | |
| $C_{12}C_{14}O(EO)_2\ SO_3Na$ | 40 | 40 | 40 | 40 |
| $C_{12}C_{14}O(EO)_3\ SS^*$ | | | | |
| $C_8C_{18}\overset{\oplus}{N}(CH_3)_2\ CH_2\ COO^-$ | | | | |
| Tensid B | | | | |
| $C_{12}C_{14}(EO)_5\ H$ | | | | |
| $C_{12}C_{14}(EO)_7\ H$ | | | | |
| $C_{12}C_{14}(EO)_{15}\ H^{**}$ | | | | |
| $C_8FSNMGA^{**}$ | | | | |
| $C_{10}FSNMGA$ | | | | |
| $C_{12}$ | 20 | | | |
| $C_{14}$ | | | | |
| $C_{10}C_{14}G_{1.2}$ *, ** | | | 20 | 20 |
| $C_{12}C_{14}G_{1.2}$ * | | 20 | | |
| Salze | | | | |
| NaCl | 1 | | | 1 |
| $Na_2SO_4$ | | 1 | | |
| Ergebnisse | | | | |
| Phasen | L | L | H/L | L |
| Viskosität (mPa·s) | 6290 / 1500 | 4000 / 900 | f | 4700 / 1300 |

Tabelle 4: (1. Teil)

| Gew.-% | 23 | 24 | 25 | 26 | 27 | 28 |
|---|---|---|---|---|---|---|
| **Tensid A** | | | | | | |
| $C_{12}C_{14}O(EO)_2\ SO_3Na$ | | | | | | |
| $C_{12}C_{14}O(EO)_4\ CH_2COONa$ | | | | | | |
| $C_{12}C_{14}O(EO)_{12}\ H$ | 40 | 40 | 50 | 40 | | |
| $C_{12}C_{18}N(CH_3)_3\ Cl$ | | | | | 40 | 40 |
| **Tensid B** | | | | | | |
| $C_{12}C_{14}(EO)_5\ H$ | | 20 | | | | 20 |
| $C_{12}FSNMGA^*$ | | | | | | |
| $C_{12}C_{14}G_{1.2}{}^*$ | | | 20 | 20 | | |
| $C_{14}H_{29}(CH_3)_2N \rightarrow O$ | | | | | | |
| MARLAMID® D1218 | | | | | | |
| **Salze** | | | | | | |
| NaCl | | | 1 | 2 | | |
| $Na_2SO_4$ | | | | | | |
| **Ergebnisse** | | | | | | |
| Phasen | H** | L | isotrop | isotrop | H | isotrop |
| Viskosität mPa·s | f | fl | fl | fl | f | fl |

* siehe Tabelle 1

** bei 40 °C

Tabelle 4: (2. Teil)

| Gew.-% | 29 | 30 | 31 | 32 | 33 | 34 |
|---|---|---|---|---|---|---|
| **Tensid A** | | | | | | |
| $C_{12}C_{14}O(EO)_2\ SO_3Na$ | | | | | 40 | 40 |
| $C_{12}C_{14}O(EO)_4\ CH_2COONa$ | | 40 | 40 | 40 | | |
| $C_{12}C_{14}O(EO)_{12}\ H$ | | | | | | |
| $C_{12}C_{18}N(CH_3)_3\ Cl$ | 40 | | | | | |
| **Tensid B** | | | | | | |
| $C_{12}C_{14}(EO)_5\ H$ | | | 20 | | | |
| $C_{12}FSNMGA^*$ | | | | | | |
| $C_{12}C_{14}G_{1.2}{}^*$ | 20 | | | 30 | | |
| $C_{14}H_{29}(CH_3)_2N \rightarrow O$ | | | | | 20 | 20 |
| MARLAMID® D1218 | | | | | | |
| **Salze** | | | | | | |
| NaCl | | | | | | |
| $Na_2SO_4$ | | | | | | 2 |
| **Ergebnisse** | | | | | | |
| Phasen | iso-trop | H | L | L | L | L |
| Viskosität mPa·s | fl | f | fl | fl | 6000 / 1530 | 5600 / 1500 |

Tabelle 4: (3. Teil)

| Gew.-% | 35** | 36 | 37 | 38 | 39** | 40 |
|---|---|---|---|---|---|---|
| **Tensid A** | | | | | | |
| $C_{12}C_{14}O(EO)_2\ SO_3Na$ | 40 | 40 | 40 | 40 | | |
| $C_{12}C_{14}O(EO)_4\ CH_2COONa$ | | | | | | |
| $C_{12}C_{14}O(EO)_{12}\ H$ | 20 | | | | | 50 |
| $C_{12}C_{18}N(CH_3)_3\ Cl$ | | | | | | |
| **Tensid B** | | | | | | |
| $C_{12}C_{14}(EO)_5\ H$ | | | | | | |
| $C_{12}FSNMGA^*$ | | | | | | 20 |
| $C_{12}C_{14}G_{1.2}^*$ | | | | | | |
| $C_{14}H_{29}(CH_3)_2N \rightarrow O$ | | | | | 20 | |
| MARLAMID® D1218 | | 10 | 20 | 20 | 40 | |
| **Salze** | | | | | | |
| NaCl | | 1 | | 2 | | |
| $Na_2SO_4$ | | | | | | |
| **Ergebnisse** | | | | | | |
| Phasen | H | H | L | L | H | L*** |
| Viskosität mPa·s | f | f | fl | fl | f | fl |

** Vergleichsbeispiel

*** 40 °C

## Patentansprüche

1. Verfahren zur Umwandlung hexagonal flüssig-kristalliner Phasen von wäßrigen Tensidlösungen in Phasen niedrigerer Viskosität,
dadurch gekennzeichnet,
daß man nichtionische Tenside bzw. deren Gemische, die in verdünnter Lösung anisometrische Mizellen bilden, zusetzt.

**2.** Verfahren nach Anspruch 1,
dadurch gekennzeichnet,
daß die Phase niedriger Viskosität eine lamellare flüssig-kristalline Phase ist.

**3.** Verfahren nach Anspruch 1,
dadurch gekennzeichnet,
daß die verdünnte Lösung 1 bis 20 g/l Tensid enthält.

**4.** Verfahren nach den Ansprüchen 1 bis 3,
dadurch gekennzeichnet,
daß die anisometrischen Mizellen stäbchenförmige Struktur mit einem mittels elektrischer Doppelbrechung festgestelltem Achsenverhältnis ≧ 10 haben.

**5.** Verfahren nach den Ansprüchen 1 bis 4,
dadurch gekennzeichnet,
daß die hexagonal flüssig-kristallinen Phasen von anionischen, betainischen, nichtionischen oder kationischen Tensiden sowie - Verträglichkeit vorausgesetzt - deren Gemischen gebildet werden.

**6.** Verfahren nach den Ansprüchen 1 bis 5,
dadurch gekennzeichnet,
daß die zugesetzten nichtionischen Tenside Fettalkoholoxethylate, Alkylpolyglycoside, Fettsäure-N-alkyl-polyhydroxyamide, Alkylaminoxide oder Fettsäurealkanolamide sind.

**7.** Verfahren nach Anspruch 6,
dadurch gekennzeichnet,
daß die zugesetzten Fettalkoholoxethylate durch Formel I

I $R - O (CH_2 - CH_2 - O)_n H$,

in der R gesättigte oder ungesättigte, verzweigte oder unverzweigte Alkylreste mit 10 bis 18 C-Atomen bedeutet und n eine Zahl zwischen 2 und 10 ist, beschrieben werden.

**8.** Verfahren nach Anspruch 6,
dadurch gekennzeichnet,
daß die zugesetzten Alkylpolyglycoside durch die Formel II

II $R' - O - Z_n$,

in der R' gesättigte oder ungesättigte, verzweigte oder unverzweigte Alkylreste mit 10 bis 16 C-Atomen und $Z_n$ ein Oligoglycosylradikal bestehend aus 1,1 bis 3 Hexose- oder Pentoseeinheiten bzw. Mischungen davon bedeuten, beschrieben werden.

**9.** Verfahren nach Anspruch 6,
dadurch gekennzeichnet,
daß die N-Alkylpolyhydroxyfettsäureamide der Formel III

III 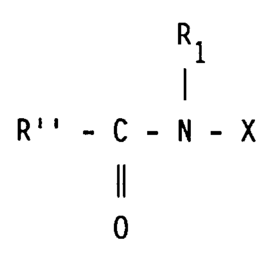 entsprechen,

in der R'' einen verzweigten oder unverzweigten Alkylrest mit 8 bis 18 C-Atomen, $R_1$ Methyl-, Ethyl-, n- oder i-Propyl und X ein Polyhydroxyhydrocarbyl mit mindestens 3 Hydroxygruppen oder Gemische

davon bedeuten.

**10.** Verfahren nach Anspruch 9, dadurch gekennzeichnet, daß die Fettsäure-N-Alkylpolyhydroxyamide Fettsäure-N-Methylglucamide der Formel IIIa

IIIa 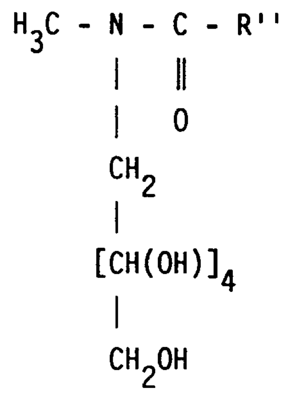

entsprechen, in der R'' einen verzweigten oder unverzweigten Alkylrest mit 10 bis 16 C-Atomen bedeutet.

**11.** Verfahren nach Anspruch 6, dadurch gekennzeichnet, daß die Alkylaminoxide der Formel IV

IV 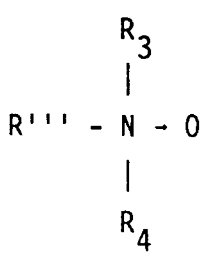

entsprechen, in der R''' einen gesättigten oder ungesättigten, verzweigten oder unverzweigten Alkylrest mit 10 bis 18 Kohlenstoffatomen und $R_3$ bzw. $R_4$ Methyl-, Ethyl-, n- oder i-Propyl bedeuten.

**12.** Verfahren nach Anspruch 6, dadurch gekennzeichnet, daß die Fettsäurealkanolamide der Formel V

V 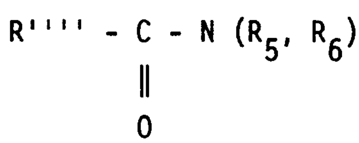

entsprechen, in der R'''' eine verzweigte oder unverzweigte, gesättigte oder ungesättigte Alkylgruppe mit 10 bis 18 C-Atomen und $R_5$ $C_2H_4OH$ bzw. $C_2H_3(CH_3)OH$ sowie $R_6$ H, $C_2H_4OH$ bzw. $C_2H_3(CH_3)OH$ bedeuten.

**13.** Verfahren nach den Ansprüchen 1 bis 12, dadurch gekennzeichnet, daß die hexagonal flüssig-kristalline Phase 25 bis 80 % Tensid enthält.

**14.** Verfahren nach den Ansprüchen 1 bis 13, dadurch gekennzeichnet, daß der Gehalt an zugesetztem nichtionischen Tensid 10 bis 40 % beträgt.

**15.** Verfahren nach den Ansprüchen 1 bis 14, dadurch gekennzeichnet, daß die niedrigviskose Phase 0 bis 5 % Alkali-, Erdalkali- oder Ammoniumsalze bzw. deren Gemische enthält.